## Europäisches Patentamt

## European Patent Office

## Office européen des brevets

(11) Publication number: **0 105 218**
**A2**

(12) **EUROPEAN PATENT APPLICATION**

(21) Application number: **83108788.7**

(22) Date of filing: **06.09.83**

(51) Int. Cl.³: **F 16 C 33/00**

(30) Priority: **10.09.82 US 416505**

(43) Date of publication of application: **11.04.84**
**Bulletin 84/15**

(84) Designated Contracting States: **DE FR GB IT NL SE**

(71) Applicant: **GENERAL SIGNAL CORPORATION, PO Box 10010 High Ridge Park, Stamford Connecticut 06904 (US)**

(72) Inventor: **Barker, James E., 5741 NE River Road, Sauk Rapids Minnesota (US)**
Inventor: **Hadley, James C., 609 N Riverside Avenue, Stamford Connecticut (US)**

(74) Representative: **Baillie, Iain Cameron et al, c/o Ladas & Parry Isartorplatz 5, D-8000 München 2 (DE)**

(54) Unitary bearing means for butterfly valves.

(57) A unitary bearing means for use in valve means, particularly butterfly or ball-type valves for high teperature or corrosive fluids, to provide in a single element, sleeve and thrust bearing means and valving member locator means. This unitary bearing has a hollow body portion adapted to fit between the rotatable shaft and the valve body, an integral shoulder flange adapted to fit between the valving member and the valve body, and a peripheral flattened portion on the shoulder flange adapted to efficiently interlock with a portion of the valve body so as to prevent rotation of the unitary bearing.

UNITARY BEARING MEANS FOR BUTTERFLY VALVES

BACKGROUND OF THE INVENTION

The present invention relates generally to bearings for valves having rotatable valving members and, more specifically, to bearings in butterfly or ball-type valve assemblies which are suitable for providing reliable service at high fluid temperatures and/or for corrosive fluids.

Butterfly valve assemblies are known to require sleeve bearings about the rotatable shaft passing through the valve body and on which the valving disc or member is mounted as well as thrust bearings supporting the valving member and centering or locating means to maintain the valving member in proper alignment within the fluid passageway so as to permit said valving member to properly open and close and form a tight seal.

In prior butterfly valve art, each of these requirements was met by means of separate and distinct bearing elements. In order to prevent contact surface galling and have the necessary bearing characteristics for each specific requirement, each such bearing could be formed from different materials. For example, Teflon could be used for the sleeve bearing, graphite-coated steel for the thrust bearing, and various metal alloys or yieldable materials for the locator means. In prior art butterfly valves it was also necessary to press fit the sleeve bearing into the appropriate shaft bore or counter-bore the shaft bore in order to prevent the sleeve bearing from sliding longitudinally along the shaft or rotating within the shaft bore. Such longitudinal motion is undesirable since it would destroy the valve and bearing alignment necessary for the valving member to function properly and, such rotational motion is undesirable since it would increase wear on the outside diameter of the bearing element and ultimately result in galling or leakage. Because of the severe space limitations peculiar to butterfly valves, other methods of preventing bearing movement were unavailable or too expensive.

Also, thrust bearings commonly had to be fitted by counter-boring the valving member and/or valve body so as to provide a secure bearing seat. Although there was concern for excess machining tolerance build-up between such stacked bearing elements, when self-lubricating materials such as Teflon could be employed to form a bearing element, some leeway was gained since additional space-filling contact surface lubricants were not necessary. In addition, bearing elements of Teflon and other resilient or yieldable materials were sufficiently compressible that such bearing elements could be made slightly oversized and then pressed together in a stack to produce the desirable tight fit. However, multi-piece bearing and locator stacks suffered from excessive material wear at their junctive surfaces and greater surface area was exposed to corrosion. Also, bearing elements formed from Teflon and other yieldable materials were not available for use in high temperature and corrosive fluid environments.

This excessive wear required frequent replacement of the bearings, and for sleeve bearings this was especially difficult. Press fit sleeve bearings require special tools to remove and replace them. Press fitting also involves inherently some loss of dimensional control over the bearing as the bearing is compressed to fit a smaller shaft bore. Counter-boring the valve body and/or the valving member and enlarging the shaft bore in that region to be fitted with the sleeve bearing is an expensive and time consuming process, although it does make field replacement of worn out bearings easier and permits greater retention of dimensional control as compared with press fitting. Another problem with counter boring of valve bodies and/or valve members is that a substantial degree of machining tolerance control is lost and, thus, radial alignment of the valving member is adversely affected. In addition, bearings so fitted by counter boring must be rotation-locked within the shaft bore and, due to the space constraints, imposed by industry and trade association standards, unique to butterfly valve assemblies, obtaining a reliable rotation-lock can be especially difficult. At the same time, the rotation lock must not interfere with the valving member sealing means nor restrict rotation of that member within the fluid passageway.

When butterfly valves are employed in conjunction with fluids having high temperatures (such as 1000°F.) or being extremely corrosive or which must survive a fire, as in firesafe valve applications, further problems and concerns arise. Teflon and most other self-lubricating materials decompose or break down in these environments and, thus, cannot be used for such valves. The enlarged fluid-exposed surface area of stacked bearings becomes critical in corrosive fluid passages and useful bearing life may be sharply diminished. Metal alloys capable of withstanding high temperatures and corrosive fluids and yet performing effectively as non-galling bearings are often very expensive and, hence, machining of bearing and locator elements must be kept to a minimum so as to decrease production costs. Also, fluid system down time must especially be reduced for systems involving such dangerous fluids. Thus, bearings must be constructed so as to be readily replaceable in the field. In general, multi-piece bearing units employed in high temperature or corrosive fluid environment have proved to be too expensive and/or ineffective at solving the above detailed problems.

SUMMARY OF THE INVENTION

An object of the present invention is the provision of a bearing means for a valve having a rotatable valving member therein.

Another object is to provide a unitary sleeve bear-

0105218

ing, thrust bearing, and valving member locator means for a butterfly valve assembly.

A further object of the invention is to provide a unitary bearing means suitable for replacing plural, separate bearing means in butterfly valve assemblies that is relatively inexpensive.

Still another object is to provide a unitary, metallic bearing means suitable for use in butterfly valve assemblies controlling the passage of high temperature or corrosive fluids therethrough and to provide a rotation-locked shaft sleeve bearing, valving disc thrust bearing, and valving member or disc locator means all within the single bearing means unit.

These and other objects are attained by providing, in a valve means, a unitary bearing means having a hollow body portion adapted to be inserted between the rotatable shaft on which the valving member is mounted and a shaft bore in the valve body, an integral shoulder flange portion adapted to engage this valving member within this valve body and the fluid passageway therethrough, and a flattened portion on the outermost perimeter of this shoulder flange adapted to provide a means to prevent rotation of the unitary bearing means.

Other objects, advantages, and novel features of the present invention will become apparent from the following detailed description of the invention when considered in conjunction with the accompanying drawings.

BRIEF DESCRIPTION OF THE DRAWINGS

Figure 1 shows a partial cross-sectional view of a butterfly valve incorporating a unitary bearing means according to the teachings of the invention.

Figure 2 shows a side view of a unitary bearing means according to the teachings of the present invention.

Figure 3 shows another side view of the unitary bearing means of Figure 2.

Figure 4 shows a top view of the unitary bearing means of Figure 2.

DESCRIPTION OF THE PREFERRED EMBODIMENTS

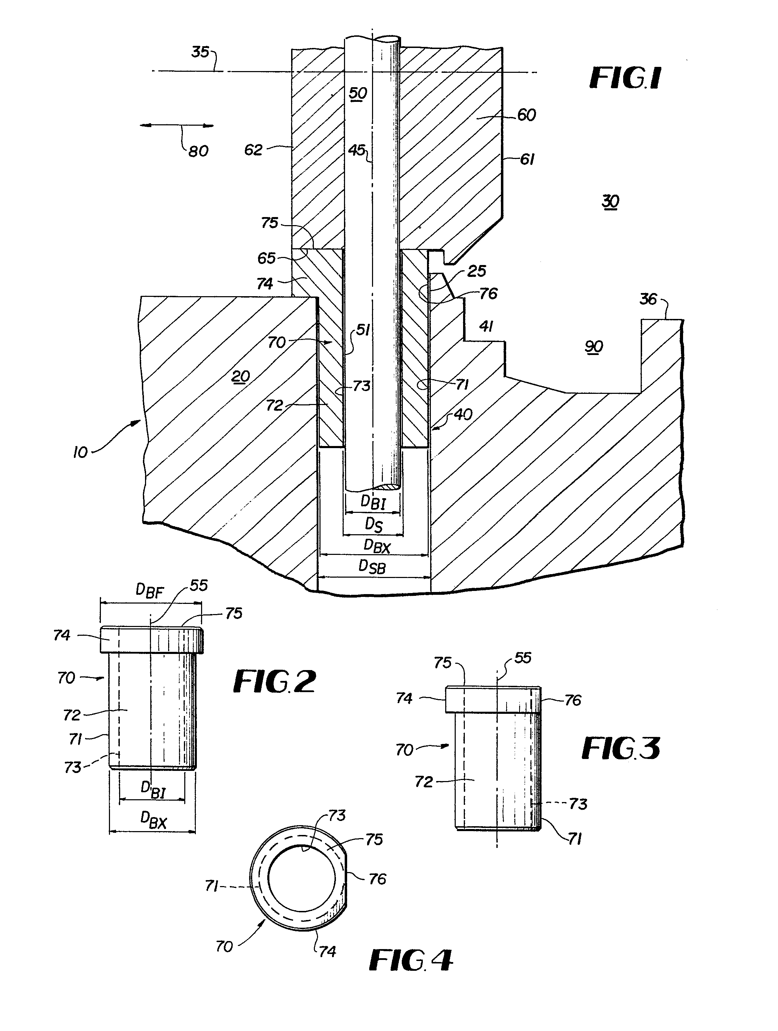

Figure 1, which illustrates a preferred embodiment of the unitary bearing means of the present invention as incorporated in a butterfly valve assembly, shows a butterfly valve 10 having a valve body member 20 with a fluid passageway 30 therein which permits fluid flow therethrough. Although not shown in Figure 1, the present invention specifically contemplates use in valves wherein valve body 20 is assembled from plural elements, although such an arrangement is not essential to the present invention. Fluid passageway 30 has a central longitudinal axis 35 and an interior surface 36 within the valve body 20. Also within valve body 20 are plural shaft bores 40, of which only one is shown in Figure 1. Each such shaft bore 40 has an interior surface 41 and a central longitudinal axis 45 and extends from fluid passageway interior surface 36 into valve body 20. In Figure 1, shaft bore 40 is shown as extending from surface 36 in a radially outward direction such that shaft bore central longitudinal axis 45 traverses central longitudinal axis 35 of fluid passageway 30, although such an arrangement is again not an essential feature of the present invention.

A rotatable shaft 50 has a peripheral surface 51 about its exterior circumference and a central longitudinal axis, shown coincident with central longitudinal axis 45 in Figure 1. It is to be clearly understood that such an arrangement is not an essential feature of the present invention. Shaft 50 is positioned within valve 10 such that at least a portion thereof is inserted into each shaft bore 40. Although Figure 1 only shows shaft 50 inserted into a single shaft bore 40, it is to be clearly understood that Figure 1 shows only a portion of the cross-section of a butterfly valve. Accordingly, there is at least one other portion of shaft 50 inserted into at least one other shaft bore 40 within valve body 20 of valve 10 in that area above fluid passageway central longitudinal axis 35 which is not shown in Figure 1. Valving member 60, shown in Figure 1 to be a butterfly valve disc, is fixedly mounted on shaft 50 within fluid passageway 30. Shaft 50 is rotatable within passageway 30 and shaft bore 40. Thus, valving member 60 is rotatable within fluid passageway 30 to various positions which provide for passage, restriction, or prevention of fluid flow through valve 10.

This control of fluid flow is generally provided by the arrangement of fluid engaging surfaces 61 and 62 of valving member 60 with respect to the primary directions of fluid flow through passageway 30, as indicated by arrows 80. In the preferred embodiment of the present invention, valving member 60 is a disc and, hence, fluid engaging surfaces 61 and 62 are generally circular. When the surface planes of said circular fluid engaging surfaces 61 and 62 are generally parallel to the primary direction of fluid flow 80, i.e., when valving member 60 is open, fluid flow is freely permitted through fluid passageway 30. As valving member 60 is closed, the angle between the surface plane of said circular fluid engaging surfaces increases and, thus, fluid flow is restricted through fluid passageway 30. When valving member 60 is closed as shown in Figure 1, the surface plane of said circular fluid engaging surfaces 61 and 62 is approximately perpendicular to primary direction of fluid flow 80 and, thus, no flow is permitted through fluid passageway 30 in valve 10. Although the subject invention contemplates the use of a valving member 50 in whose closed position fluid engaging surfaces 61 and 62 do not have surface planes perpendicular to the direction of the fluid flow, such a valve structure has not been found, for most applications, to be as advantageous as the valve structure described herein above.

Although also not shown in Figure 1, means are provided on valve 10 for controlling the rotation of shaft 50 and valving member 60 within fluid passageway 30. Various fluid flow control devices are well-known in the prior art and, hence, it is not necessary to discuss them in detail in this specification.

Unitary bearing means 70 is provided for each shaft bore 40 into which a portion of shaft 50 is inserted. Bearing means 70 has at least a portion 72 thereof mounted inside shaft bore 40 between interior surface 41 of shaft bore 40 and peripheral surface 51 of shaft 50. Thus, unitary bearing means 70 provides a sleeve bearing means for shaft 50. Also, upper surface 75 of shoulder flange 74 engages surface 65 of valving means 60 so as to provide a thrust bearing means for valving member 60. When plural bearing means 70 are employed in valve 10, upper surfaces 75 of each bearing 70 act in conjunction with each other so as to provide a centering or locating means for valving member 60.

Unitary bearing means 70 is comprised generally of a hollow body portion 72 and a shoulder flange 74 having a flattened peripheral portion 76 thereon. Hollow body portion 72 has interior and exterior surfaces 73 and 71, respectively, thereon such that exterior surface 71 engages interior surface 41 of shaft bore 40 when bearing means 70 is inserted within shaft bore 40, and interior surface 73 engages peripheral surface 51 of shaft 50 when shaft 50 is inserted within bearing means 70. It has been found to be particularly advantageous, although not essential to the subject invention, to form shaft 50, bearing means 70, and shaft bore 40 so that each has a cylindrical cross-section and so that each of their central longitudinal axis coincide, as shown in Figure 1. In order to permit bearing means 70 to be fitted within shaft bore 40 without having to press fit or otherwise forceably insert bearing means 70 into shaft bore 40 in a manner which will result in the deformation bearing means 70, the diameter of exterior surface 71 should be less than or equal to the diameter of interior surface 41. In order to permit rotation of shaft 50 within bearing means 70, the diameter of interior surface 73 should be greater than the diameter of peripheal surface 51. Stated with reference to Figures 1 and 2, $D_{SB}$ should be greater than or equal to $D_{BX}$, and $D_{BI}$ should be greater than $D_S$. In order to prevent galling between interior surface 73 and peripheral surface 51 it may be necessary to employ lubricants in the space between these two surfaces.

Shoulder flange 74 is formed integrally with hollow body portion 72 of bearing means 70. Shoulder flange 74 is positioned within valve body 20 and fluid passageway 30 and is provided with sufficient thickness or height so that upper surface 75 of bearing means 70 may engage surface 65 of valving member 60 and yet not cause significant degradation of the fluid seal around valving member 60. Although not shown in Figure 1, it is to be clearly understood that the subject invention contemplates the use of various sealing rings or other sealing means positioned in recess for valving member 60 in conjunction with bearing means 70. It has been found to be particularly advantageous although not essential to the subject invention, to form shoulder flange 74 as an annular lip extending completely about the exterior surface of hollow body portion 70. The outermost exterior diameter $D_{BF}$ across shoulder flange 74 is greater than either diameter $D_{BX}$ of exterior surface 71 or diameter $D_{SB}$ of interior surface 41, thus, shoulder flange 74 does not fit entirely within shaft bore 40 and may rest on interior surface 36 of fluid passageway 30 between surfaces 36 and 65 so as to retain bearing means 70 within shaft bore 40 such that motion along axis 45 is prohibited.

Shoulder flange 74 is provided with a flattened portion 7776 on its outermost perimeter which serves to prevent rotation of bearing means 70 within shaft bore 40. If shoulder flange 74 is advantageously chosen to be an annular lip extending from hollow body portion 72, then flattened portion 76 forms a sequential cut across said annular lip as shown in Figure 4. To provide a most effective locking means against rotation of bearing means 70, flattened portion 76 may interlockingly engage a correspondingly flattened portion 25 extending from valve body 20. As shown in Figure 1, corresponding flattened portion 25 does not need to take up much room in the valve body.

Unitary bearing means 70 may be advantageously formed from a single, homogeneous material, such as stainless steel or nickel alloys, which is capable of operation at normal fluid temperatures as well as high temperatures, such as 1,000°F., and with fluids which have a high corrosive nature.

Since bearing means 70 is a unitary element, fewer surface areas are exposed to corrosion and wear, machining tolerance buildup is reduced, bearing production costs are reduced, and inter-bearing motion is eliminated without the need to press fit or counter bore. Also, assembly and replacement costs and time are reduced since the provision of an integral shoulder and rotation-lock means thereon eliminates the need for press-fitting and counterboring. Likewise, greater dimensional control is retained and the likelihood of contact surface galling is reduced. Finally, unlike multi-piece stacks of bearings in the prior art, the unitary bearing provides an efficient rotation-lock means for use with butterfly valves having very strict space limitations within the fluid passageway.

From the preceding description of the preferred embodiment, it is evident that the objects of the invention are attained and although the invention has been described and illustrated in detail, it is to be clearly understood that the same is by way of illustration and example only and is not to be taken by way of limitation. The spirit and scope of the invention are to be limited only by the terms of the appended claims.

C L A I M S

1.        In a valve means providing efficient and reliable
operation over a range of temperatures and for sustained
periods of time, including at least a valve body portion
with a fluid passageway, having a central longitudinal axis
and an interior surface, plural shaft bores each having an
interior surface and a central longitudinal axis, a rotatable
shaft having a peripheral surface and a central longitudinal
axis and being positioned so that at least a portion thereof
is inserted into each of said plural shaft bores, a valving
member mounted on said shaft interiorly of said fluid
passageway such that said valving member is rotatable with
said shaft locating means for said valving member, a thrust
bearing means for said valving member and a sleeve bearing
means for said shaft, the improvement comprising a unitary
bearing and locating means comprised of:

        a hollow body portion, having an interior and an
exterior surface thereon and being insertable into one of
said shaft bores between said shaft bore interior surface
and said inserted shaft portion's peripheral surface so as
to provide a sleeve bearing means for said shaft upon
rotation thereof;

        a shoulder flange portion integral with said
hollow body portion and positioned within said valve body
and said fluid passageway so as to engage said valving
member and provide a thrust bearing means for said valving
member and also having sufficient height or thickness so
as to provide a reliable locating means for said same
valving member; and

        said shoulder flange having a flattened portion
on the outermost peripheral edge thereof engaging a surface
of said valve body so as to provide means for preventing
rotation of said unitary bearing means with respect to
said valve body.

2.        The valve means according to claim 1, wherein
said central longitudinal axis of each portion of said
rotatable shaft which is inserted into one of said shaft

CASE: DZ 107

bores is coincident with the central longitudinal axis of that shaft bore, said central longitudinal axis of said rotatable shaft traverses said central longitudinal axis of said fluid passageway, and said valving member is comprised of a disc having a generally planar fluid engaging surface and is mounted on said rotatable shaft such that the plane of said planar fluid engaging surface is generally parallel to the primary direction of fluid flow when fluid flow is permitted through said valve body and generally perpendicular to the primary direction of fluid flow when fluid flow is prevented through said valve body.

3.      The valve means according to claim 1, wherein said hollow body portion of said unitary bearing means and the interior and exterior surfaces thereon are generally cylindrical, the portions of each of said shaft bores and said shafts into and around which, respectively, said hollow body portions are inserted are also generally cylindrical, the diameter of said exterior surface of said hollow body is less than or equal to the diameter of said shaft bore interior surface, and the diameter of said interior surface of said hollow body portion is greater than the said shaft peripheral surface.

4.      The valve means according to claim 1, wherein said shoulder flange forms an annular lip extending completely about the exterior surface of said hollow body portion, and the outermost exterior diameter across said annular lip is greater than the diameter of said shaft bore interior surface.

5.      The valve means according to claim 4, wherein said unitary bearing means is formed from a single homogeneous material capable of efficient and reliable operation at normal as well as high fluid temperatures and with fluids having highly corrosive characteristics.

6.      The valve means according to claim 4, wherein said flattened portion of said shoulder flange forms a secantial cut across said annular lip, and said flattened portion engages a corresponding flattened portion within said valve body portion so as to provide said rotation prevention means by interlocking of these flattened portions.

7. The valve means according to claim 4, wherein said unitary bearing means is formed from a material selected from the group of stainless steel and nickel alloys.

FIG.1

FIG.2

FIG.3

FIG.4